**Europäisches Patentamt**

**European Patent Office**

**Office européen des brevets**

(11) Veröffentlichungsnummer: **0 014 330**
**B1**

(12) **EUROPÄISCHE PATENTSCHRIFT**

(45) Veröffentlichungstag der Patentschrift:
**12.01.83**

(21) Anmeldenummer: **80100143.9**

(22) Anmeldetag: **11.01.80**

(51) Int. Cl.³: **H 04 L 7/04, H 04 L 25/40**

(54) Verfahren und Schaltungsanordnung zum Synchronisieren von Daten mit Hilfe von Synchronisierbits.

(30) Priorität: **23.01.79 DE 2902504**

(43) Veröffentlichungstag der Anmeldung:
**20.08.80 Patentblatt 80/17**

(45) Bekanntmachung des Hinweises auf die Patenterteilung:
**12.01.83 Patentblatt 83/2**

(84) Benannte Vertragsstaaten:
**BE CH GB NL SE**

(56) Entgegenhaltungen:
**DE-A-2 612 324**
**DE-A-2 729 663**
**DE-B-1 954 420**
**DE-B-2 813 798**

(73) Patentinhaber: **SIEMENS AKTIENGESELLSCHAFT**
**Berlin und München, Postfach 22 02 61,**
**D-8000 München 22 (DE)**

(72) Erfinder: **Markwitz, Wernhard, Dipl.-Ing., Thalkirchner Strasse 107, D-8000 München 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

Verfahren und Schaltungsanordnung zum Synchronisieren von Daten mit Hilfe von Synchronisierbits.

Die Erfindung bezieht sich auf ein Verfahren zum Synchronisieren von Daten mit Hilfe von Synchronisierbits, wobei je n Synchronisierbits sich überlappende Synchronisierworte bilden, die einerseits das jeweils folgende Synchronisierbit und anderseits aufeinanderfolgende Zeitpunkte signalisieren, wonach empfangsseitig zeitlich aufeinanderfolgende Bitkombinationen, bestehend aus je n Bits gespeichert werden, die wahrscheinlich den Synchronisierworten gleichen, wonach aus den Bitkombinationen das wahrscheinlich folgende Synchronisierbit ermittelt wird, wonach in einer ersten Phase die wahrscheinliche Gleichheit der Folge der empfangenen Synchronisierbits und der Folge der wahrscheinlichen Synchronisierbits ermittelt wird und wonach in einer zweiten Phase der Synchronisierzeitpunkt ermittelt wird.

Die DE-B2-1 954 420 bezieht sich auf ein bekanntes Verfahren zum Synchronisieren empfangsseitiger Geräte. Nach diesem bekannten Verfahren wird einerseits eine binäre Nachricht und anderseits eine Folge von Synchronisierbits über verschiedene Kanäle übertragen. Mit Hilfe eines aus n Speicherzellen bestehenden Schieberegisters und mit Hilfe einer Paritätsstufe werden sendeseitig periodisch $2^n-1$ Synchronisierbits der Folge erzeugt. Diese Folge zeichnet sich dadurch aus, dass je n Synchronisierbits sich überlappende Synchronisierworte bilden, die einerseits das jeweils folgende Synchronisierbit signalisieren und anderseits aufeinanderfolgende Zeitpunkte identifizieren. Wenn derartige Synchronisierbits übertragen werden, können auf der Empfangsseite mit Hilfe der Synchronisierworte die Synchronisierzeitpunkte ermittelt werden.

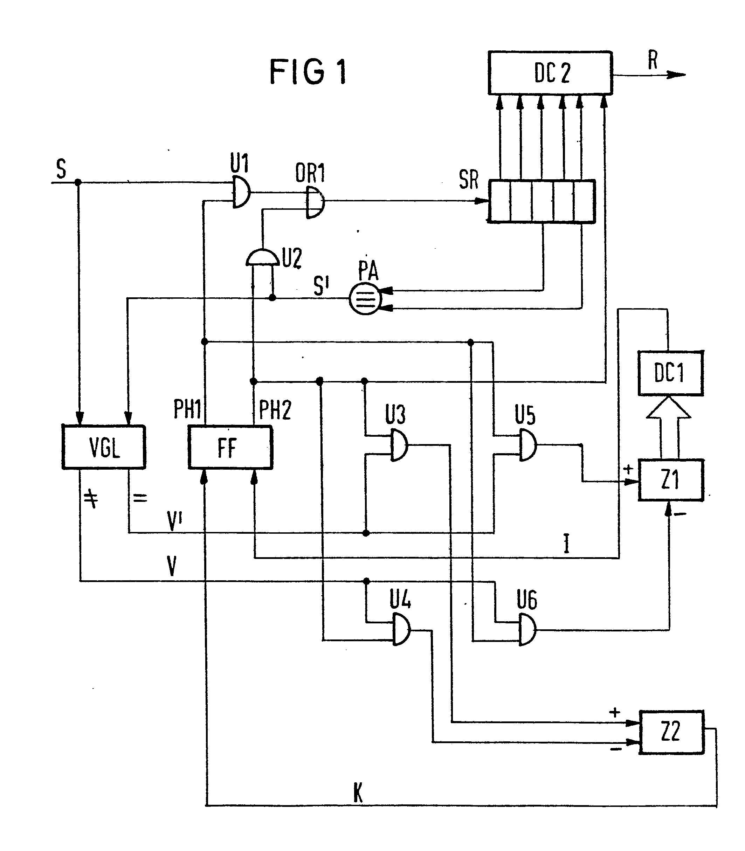

Fig. 1 zeigt eine gemäss der DE-B2-1 954 420 bekannte Schaltungsanordnung zum Empfang der Synchronisierbits S. Während einer ersten Phase PH1 gelangen diese Synchronisierbits S über die Gatter U1 und OR1 in das Schieberegister SR. Dabei werden die Synchronisierbits seriell mit dem Bittakt in das Schieberegister SR eingegeben. Die Ausgänge zweier Zellen dieses Schieberegisters sind an die Paritätsstufe PA angeschlossen, die bei Gleichheit der beiden eingangs zugeführten Binärwerte ein 1-Signal und bei Ungleichheit der beiden eingangs zugeführten Binärwerte ein O-Signal abgibt. Dieses Schieberegister SR und diese Paritätsstufe PA bilden einen Generator, der einem entsprechenden sendeseitigen Generator gleicht und der die Folge der Synchronisierbits erzeugt. Wenn die sendeseitig erzeugte Folge von Synchronisierbits ungestört empfangen wird, dann gleicht die gemäss Fig. 1 empfangene Folge von Synchronisierbits S jener Bitfolge, die über den Ausgang der Paritätsstufe PA abgegeben wird.

Wegen der zu erwartenden fehlerhaften Bits unterscheiden sich die empfangenen Synchronisierbits S von den empfangsseitig erzeugten Synchronisierbits S'. Im Vergleicher VGL werden die empfangenen Synchronisierbits S und die empfangsseitig ermittelten Synchronisierbits S' bitweise miteinander verglichen und bei Gleichheit der beiden Bits wird vom Vergleicher das Vergleichssignal V' abgegeben, wogegen bei Ungleichheit der beiden Bits das Vergleichssignal V abgegeben wird.

Das Flipflop FF signalisiert entweder die erste Phase PH1 oder die zweite Phase PH2. Während der Dauer der ersten Phase PH1 sind die Gatter U1, U5, U6 durchlässig. Auf diese Weise wird, wie bereits beschrieben, die Folge der Synchronisierbits S dem Schieberegister SR zugeführt. Ausserdem wird das Vergleichssignal V' über das Gatter U5 dem Zähler Z1 zugeführt, dessen Zählerstand dadurch um eine Einheit erhöht wird. Im Gegensatz dazu wird das Vergleichssignal V über das Gatter U6 einem weiteren Eingang des Zählers Z1 zugeführt und dadurch wird der Zählerstand dieses Zählers um eine Einheit erniedrigt. Während der Dauer der ersten Phase PH1 wird also bei Gleichheit der Synchronisierbits S und S' der Zählerstand erhöht, und bei Ungleichheit der beiden Synchronisierbits wird der Zählerstand erniedrigt. Über den Ausgang des Zählers Z1 werden die jeweiligen Zählerstände in Form von Binärzahlen abgegeben und mit Hilfe des Decodierers DC1 decodiert. Bei Erreichen eines vorgegebenen Zählerstandes gibt dieser Decodierer DC1 ein Identitätssignal I ab, das die wahrscheinliche Gleichheit der beiden Folgen von Synchronisierbits S und S' signalisiert.

Mit Hilfe des Identitätssignals I wird das Flipflop FF in den anderen stabilen Zustand versetzt, der die zweite Phase PH2 signalisiert. Während dieser zweiten Phase PH2 sind die Gatter U1, U5, U6 gesperrt, wogegen die Gatter U2, U3, U4 durchlässig sind. Insbesondere ist nun das Gatter U2 durchlässig, so dass die empfangsseitig ermittelten Synchronisierbits S' über das ODER-Glied OR1 anstelle der Synchronisierbits S dem Schieberegister SR zugeführt werden. Ausserdem wird während dieser zweiten Phase PH2 der Decodierer DC2 aktiviert, der auf ein spezielles Synchronisierwort anspricht und der beim Erkennen dieses Synchronisierwortes das Referenzsignal R abgibt. Da jedes der Synchronisierworte einen bestimmten Zeitpunkt innerhalb der Folge signalisiert, wird auch durch das Referenzsignal ein spezieller Zeitpunkt, nämlich der Synchronisierzeitpunkt signalisiert. Ab diesem Synchronisierzeitpunkt laufen die sendeseitige und die empfangsseitige Anlage synchron.

Zur Überwachung des synchronen Zustandes werden auch während der zweiten Phase PH2 die empfangenen Synchronisierbits S und die empfangsseitig errechneten Synchronisierbits S' miteinander verglichen, und vom Vergleicher VGL wird eines der beiden Vergleichssignale V' oder V abgegeben. Bei Gleichheit der beiden Synchronisierbits S und S' gelangt das Vergleichssignal V' über das Gatter U3 zum Zähler Z2 und erhöht dessen Zählerstand, wodurch der bereits

...~~~~~chte synchrone Zustand nicht geändert wird.

~~Ungleichheit der beiden Synchronisierbits S und S' gelangt das Vergleichssignal V über das Gatter U4 an einen weiteren Eingang des Zählers Z2 und bewirkt eine Erniedrigung des Zählerstandes. Einzelne Erniedrigungen dieses Zählerstandes wirken sich in bezug auf den synchronen Zustand nicht aus. Falls aber mehrere derartige Vergleichsimpulse V erzeugt werden, dann wird der Zählerstand des Zählers Z2 unter einen vorgegebenen Zählerstand erniedrigt und gibt über seinen Ausgang ein Nichtübereinstimmungssignal K an das Flipflop FF ab, welches dieses Flipflop in den anderen der beiden stabilen Zustände versetzt. Damit befindet sich das System wieder in der ersten Phase PH1, während der die empfangenen Synchronisierbits S anstelle der errechneten Synchronisierbits S' dem Schieberegister SR zugeführt werden.

Beim Betrieb des Schieberegisters SR wurde angenommen, dass es am Beginn der Folge das Synchronisierwort 00000 speichert. Es folgen dann die Synchronisierworte 10000, 11000, 11100 usw. bis zum Synchronisierwort 00001. Insgesamt werden also $2^5-1 = 31$ Synchronisierworte erzeugt, entsprechend den Dezimalzahlen von 0 bis 30. Die Bitkombination 11111 entsprechend dem Dezimalwert 31 ist somit kein Synchronisierwort.

Bei gestörtem Empfang der Synchronisierbits S kann eine längere Folge von 1-Werten empfangen werden. Unter der Voraussetzung der ersten Phase PH1 wird in das Schieberegister SR die Bitkombination 11111 eingespeichert, und über den Ausgang der Paritätsstufe PA werden als errechnete Synchronisierbits S' lauter 1-Werte abgegeben. Die Synchronisierbits S und S' haben somit beide 1-Werte, so dass der Vergleicher VGL bei Übereinstimmung dieser beiden Werte das Vergleichssignal V' abgibt, das nach einiger Zeit die zweite Phase PH2 bewirkt. Das Schieberegister SR erhält nun als errechnetes Synchronisierbit S' eine Folge von 1-Werten. Auch der Vergleicher VGL erhält als Synchronisierbit S' eine Folge von 1-Werten, und solange auch die Folge von empfangenen Synchronisierbits S überwiegend 1-Werte aufweist, wird überwiegend das Vergleichssignal V' abgegeben, und das System verbleibt in seiner zweiten Phase PH2. Ein Übergang von der Phase PH2 in die Phase PH1 findet erst dann statt, wenn unter den empfangenen Synchronisierbits überwiegend 0-Werte enthalten sind, weil dann das Vergleichssignal V abgegeben und der Zählerstand des Zählers Z2 erniedrigt wird. Sobald dieser Zähler Z2 einen vorgegebenen niedrigen Zählerstand erreicht hat, wird mit Hilfe des Nichtübereinstimmungssignals N wieder die erste Phase PH1 eingeleitet. Im Zuge dieser ersten Phase PH1 kann dann erneut ein Synchronisierungsversuch begonnen werden.

Es ist erwünscht, den synchronen Zustand möglichst rasch zu erreichen, um mehr Zeit für die Sendung der Nachricht zur Verfügung zu haben. Unter dieser Voraussetzung hat das beschriebene bekannte Verfahren den Nachteil, dass es bei Empfang einer Folge von 1-Werten als Synchronisierbits S relativ lange dauert, bis die Umschaltung von der zweiten Phase PH2 zur ersten Phase PH1 erfolgt und ein neuerlicher Synchronisierversuch gestartet wird.

Es wurde bisher angenommen, dass die Paritätsstufe PA bei gleichen Binärwerten ein 1-Signal und bei ungleichen Binärwerten ein 0-Signal abgibt. Es wäre denkbar, dass eine derartige Paritätsstufe bei gleichen eingangs zugeführten Binärwerten ein 0-Signal und bei verschiedenen eingangs zugeführten Binärwerten ein 1-Signal abgibt. Unter dieser Voraussetzung darf die Bitkombination 00000 kein Synchronisierwort sein, da sich sonst Schwierigkeiten ergeben. Um dies zu erläutern wird angenommen, dass als Synchronisierbit S eine Folge von 0-Werten empfangen wird. Während der ersten Phase PH1 gelangt diese Folge in das Schieberegister SR, und über den Ausgang der Paritätsstufe PA werden als errechnete Synchronisierbits nur 0-Werte abgegeben. Die Synchronisierbits S und S' gleichen also einander, und mit Hilfe der Vergleichssignale V' wird der Zählerstand des Zählers Z1 hochgezählt, und nach Erreichen eines vorgegebenen Zählerstandes gibt der Decodierer DC1 das Identitätssignal I ab. Damit wird die zweite Phase PH2 eingeleitet.

Unter diesen Voraussetzungen ist eine Synchronisierung bei Empfang einer Serie von 0-Werten nicht möglich. Erst dann, wenn überwiegend 1-Werte empfangen werden, erfolgt der Übergang von der zweiten Phase PH2 in die erste Phase PH1, die einen erneuten Synchronisierversuch ermöglicht. Ähnlich wie beim Empfang einer Serie von 1-Werten ergeben sich auch beim Empfang der Serie von 0-Werten Schwierigkeiten, weil es relativ lange dauert, bis das System von der zweiten Phase PH2 in die erste Phase PH1 übergeht.

Es wäre auch denkbar, eine Einspeicherung der Serie von 1-Werten oder 0-Werten in das Schieberegister SR zu verhindern. In diesem Fall müsste dem Schieberegister SR ein Zwischenspeicher vorgeschaltet werden, dessen Ausgänge mit einem Decodierer verbunden sind, der die Serie erkennt und dann das Schieberegister SR sperrt. Dies würde einerseits einen zusätzlichen Aufwand und andererseits bedeuten, dass eine Synchronisation auch dann vorgetäuscht wird, wenn die Serie auftritt.

Der Erfindung liegt die Aufgabe zugrunde, die Synchronisierung nach Empfang gestörter Synchronisierbits schneller als bisher durchzuführen.

Die der Erfindung zugrundeliegende Aufgabe wird dadurch gelöst, dass nach dem Erreichen der zweiten Phase die erste Phase eingeleitet wird, falls eine Bitkombination kein Synchronisierwort ist. Auf diese Weise wird erreicht, dass Bitkombinationen, die keine Synchronisierworte sind, augenblicklich erkannt werden und dass ohne Verzögerung im Rahmen der ersten Phase ein weiterer Synchronisierversuch gestartet wird. Auf diese Weise wird die Synchronisierung schneller als bisher durchgeführt.

Um Bitkombinationen, die keine Synchronisierworte sind, schnell erkennen zu können, ist es zweckmässig, mit einer Schaltungsanordnung zur Durchführung des Verfahrens die Bitkombi .ationen in einem Schieberegister zu speichern und an die Ausgänge des Schieberegisters einen Decodierer anzuschliessen, der beim Auftreten einer Bitkombination, die kein Synchronisierwort ist, ein Decodiersignal abgibt, das die Umschaltung von der zweiten Phase in die erste Phase bewirkt.

Es wurde bereits erwähnt, dass mit Hilfe des Schieberegisters SR und mit Hilfe der Paritätsstufe PA insgesamt $2^5-1=31$ verschiedene Synchronisierworte erzeugt werden können. Bei n Zellen des Schieberegisters SR können also allgemein $2^n-1$ verschiedene Synchronisierworte erzeugt werden. Um eine rasche Synchronisierung zu erzielen, kann es vorteilhaft sein, nicht alle möglichen $2^n-1$ Synchronisierworte zur Synchronisierung heranzuziehen. Unter diesen Voraussetzungen ist es zweckmässig, dass der Decodierer einen Festwertspeicher enthält, der alle aus n Bits gebildeten und kein Synchronisierwort darstellenden Bitkombinationen speichert und nach Aufruf der entsprechenden Adressen über seine Ausgänge abgibt, dass mit Hilfe eines Adressengebers zwischen aufeinanderfolgenden Synchronisierbits zeitlich nacheinander alle Adressen der Bitkombinationen erzeugt und an den Festwertspeicher abgegeben werden, dass n Vergleicher einerseits an die Ausgänge des Schieberegisters und andererseits an die Ausgänge des Festwertspeichers angeschlossen sind und dass die Ausgänge der Vergleicher mit einem Gatter verbunden sind, über dessen Ausgang das Decodiersignal abgegeben wird.

Bisher wurde angenommen, dass die Synchronisierbits über einen eigenen Kanal übertragen werden, so dass gleichzeitig die Daten der eigentlichen Nachricht und die Synchronisierbits über verschiedene Kanäle übertragen werden können. Wenn im Gegensatz dazu zeitlich nacheinander zunächst eine Folge von Synchronisierbits und anschliessend als Nutzinformation die eigentliche Nachricht übertragen wird, ist es wünschenswert, die Dauer, während der die Synchronisierbits gesendet werden, relativ kurz zu bemessen, um die Zeit für die Sendung der Nachricht nicht zu kürzen. Es ist daher zweckmässig, dass während der zur Verfügung stehenden Synchronisierdauer sowohl die erste Phase PH1 als auch die zweite Phase PH2 durchlaufen werden und die Synchronisierung hergestellt wird. Falls es nicht gelingen würde, die Synchronisierung während der vorgegebenen Synchronisierdauer herzustellen, würde die nach der Synchronisierdauer gesendete Nachricht mangels Synchronisierung nicht empfangen werden können. Unter diesen Voraussetzungen ist es also besonders wichtig, dass nach dem Erreichen der zweiten Phase so schnell wie möglich die erste Phase eingeleitet wird, falls eine Bitkombination auftritt, die kein Synchronisierwort ist.

Im folgenden werden Ausführungsbeispiele der Erfindung anhand der Figuren 2 bis 4 beschrieben. In allen Figuren sind gleiche Gegenstände mit gleichen Bezugszeichen bezeichnet. Es zeigen:

Fig. 2 eine Schaltungsanordnung zum Synchronisieren von Daten mit Hilfe von Synchronisierbits, die über einen eigenen Synchronisierkanal übertragen werden,

Fig. 3 eine Schaltungsanordnung zum Synchronisieren von Daten, bei der die Daten der Nachricht und die Synchronisierbits über getrennte Kanäle übertragen werden und

Fig. 4 ein Ausführungsbeispiel eines schematisch in den Figuren 2 und 3 dargestellten Decodierers.

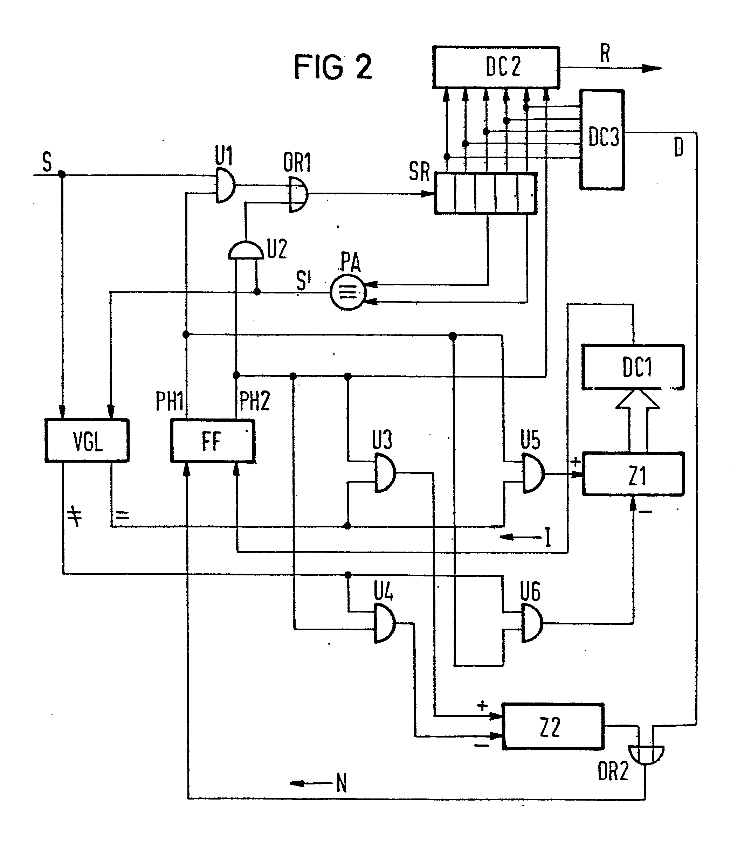

Zusätzlich zu den in Fig. 1 dargestellten Gegenständen sind gemäss Fig. 2 der Decodierer DC3 und das Gatter OR2 vorgesehen. Der Decodierer DC3 ist an die Ausgänge der Zellen des Schieberegisters SR angeschlossen. Wenn eine Bitkombination auftritt, die kein Synchronisierwort ist, dann erkennt dieser Decodierer DC3 diese Bitkombination und gibt das Decodiersignal D ab, das über das Gatter OR2 die Rückstellung des Flipflops in die erste Phase PH1 bewirkt.

Wenn die Paritätsstufe PA beispielsweise bei Gleichheit der beiden eingangs zugeführten Binärwerte ein 1-Signal und bei Ungleichheit der beiden eingangs zugeführten Binärwerte ein 0-Signal abgibt, dann spricht der Decodierer DC3 auf die Bitkombination 11111 an und gibt das Decodiersignal D ab. Falls die Paritätsstufe PA bei Ungleichheit der beiden eingangs zugeführten Binärwerte ein 1-Signal und bei Gleichheit der beiden eingangs zugeführten Binärwerte ein 0-Signal abgibt, dann spricht der Decodierer DC3 auf die Bitkombination 00000 an und signalisiert mit dem Decodiersignal D diese Bitkombination.

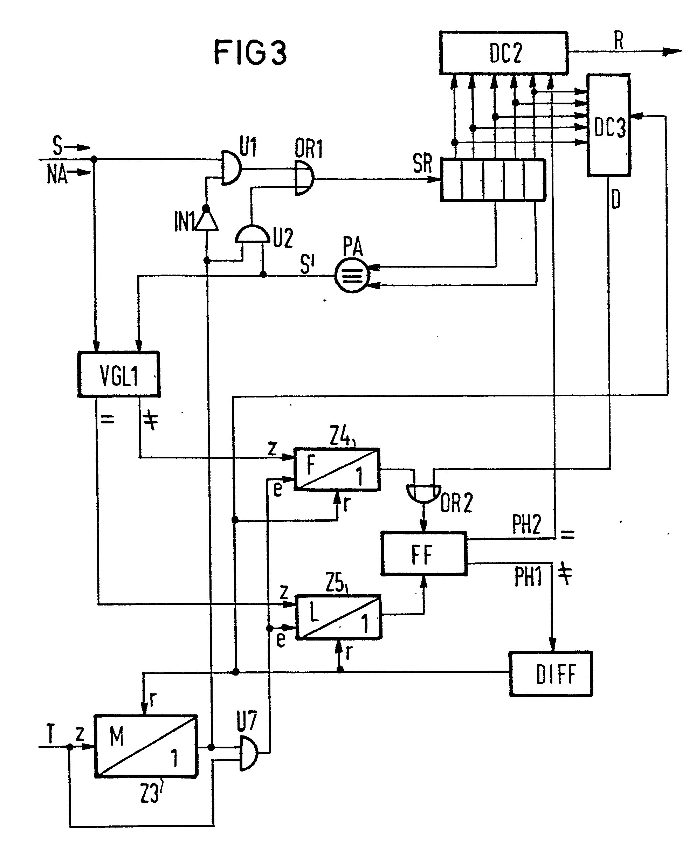

Die in Fig. 2 dargestellte Schaltungsanordnung dient zum Synchronisieren von Daten mit Hilfe von Synchronisierbits, die über einen eigenen Synchronisierkanal übertragen werden. Im Gegensatz dazu wird gemäss Fig. 3 angenommen, dass die Daten der eigentlichen Nachricht NA und die Synchronisierbits S zeitlich nacheinander über den gleichen Kanal übertragen werden.

Fig. 3 zeigt den Zähler Z3, der über den Zähleingang z die Impulse T erhält, die im Takt der Synchronisierbits S und nur gemeinsam mit den Synchronisierbits S auftreten. Wenn der Zähler Z3 den vorgegebenen Zählerstand M erreicht, dann gibt er über seinen Ausgang so lange ein 1-Signal ab, bis er zurückgesetzt wird. Der Zählerstand M ist gleich oder ungefähr gleich der Anzahl der Zellen des Schieberegisters SR. Es wird zunächst angenommen, dass der Zähler Z3 den vorgegebenen Zählerstand M noch nicht erreicht hat und der Zähler Z3 über seinen Ausgang ein 0-Signal abgibt. Dieses 0-Signal wird einerseits mit dem Inverter IN1 invertiert, so dass das Gatter U1 geöffnet ist und die Synchronisierbits S über das Gatter OR1 dem Schieberegister SR zugeführt werden. Andererseits ist mit dem 0-Signal des Zählers Z3 das Gatter U7 gesperrt und die Zähler Z4, Z5 sind nicht zählbereit. Solange der Zähler Z3 den Zählerstand M noch nicht erreicht hat, werden also im wesentlichen nur die Synchronisierbits S in das Schieberegister SR eingegeben.

Wenn der Zähler Z3 den vorgegebenen Zählerstand M erreicht, gibt er über seinen Ausgang ein 1-Signal ab. Dieses 1-Signal wird mit Hilfe der Inverter IN1 invertiert und bewirkt eine Sperre des Gatters U1 und eine Öffnung des Gatters U2 und U7. Nunmehr werden einerseits die Synchronisierbits S' anstelle der Synchronisierbits S dem Schieberegister SR zugeführt, und anderseits wird das Gatter U7 geöffnet. Die Impulse T gelangen nun an die Eingänge e der Zähler Z4, Z5, die damit in Zählbereitschaft versetzt werden.

Mit Hilfe des Schieberegisters SR und mit Hilfe der Paritätsstufe PA werden die empfangsseitig errechneten Synchronisierbits S' gewonnen, die gleich den empfangenen Synchronisierbits S sein sollten, falls die Synchronisierbits S ungestört empfangen werden. Im Vergleicher VGL1 werden die Synchronisierbits S und S' miteinander verglichen, und bei Gleichheit bzw. Ungleichheit dieser Synchronisierbits werden über den linken bzw. rechten Ausgang jeweils 1-Signale abgegeben.

Der Zähler Z4 zählt die Nichtübereinstimmungen, der Zähler Z5 die Übereinstimmungen der Synchronisierbits S und S'. Wenn der Zähler Z5 den vorgegebenen Zählerstand L erreicht, dann hat er L Übereinstimmungen der Synchronisierbits gezählt. Der Zähler Z5 signalisiert diesen Sachverhalt, indem er über seinen Ausgang ein 1-Signal an das Flipflop FF abgibt. Die beiden stabilen Zustände dieses Flipflops signalisieren je eine erste Phase PH1 bzw. eine zweite Phase PH2. Es wird angenommen, dass sich das Flipflop FF zunächst im Zustand der Phase PH1 befunden hat und dass dieses Flipflop durch das 1-Signal des Zählers Z5 in den Zustand der zweiten Phase PH2 versetzt wird. In diesem Zustand signalisiert das Flipflop FF, dass insgesamt L Übereinstimmungen der Synchronisierbits ermittelt wurden. Über den mit PH2 bezeichneten Ausgang gibt das Flipflop FF ein Signal an den Decodierer DC2 ab, der damit in die Lage versetzt wird, ein spezielles im Schieberegister SR gespeichertes Synchronisierwort zu erkennen. Sobald der Decodierer DC2 dieses Synchronisierwort erkennt, gibt er das Referenzsignal R ab, das den Synchronisierzeitpunkt signalisiert. Das Referenzsignal R beendet die Synchronisierphase. Danach werden keine Impulse T dem Zähler Z3 zugeführt.

Der Zähler Z4 zählt die Nichtübereinstimmungen der Synchronisierbits S und S' und gibt bei Erreichen des Zählerstandes F ein 1-Signal an das Flipflop FF ab. Falls das Flipflop FF zu diesem Zeitpunkt im Zustand der zweiten Phase PH2 ist, dann wird es in den Zustand der ersten Phase PH1 zurückversetzt und gibt an die Differenzierstufe DIFF ein 1-Signal ab. Die Differenzierstufe DIFF differenziert dieses 1-Signal und gibt einen Rücksetzimpuls an die Rücksetzeingänge R der Zähler Z3, Z4, Z5 ab. Damit wird ein neuer Synchronisierversuch gestartet.

Bei dem in Fig. 3 dargestellten Ausführungsbeispiel ist zur Sendung und zum Empfang der Synchronisierbits S eine bestimmte Synchronisierzeit vorgegeben, nach deren Ablauf die eigentlichen Nachrichtenbits NA gesendet und empfangen werden. Die Synchronisierung ist somit nur während dieser Synchronisierzeit möglich. Falls die Synchronisierung während dieser Synchronisierzeit nicht erreicht werden kann, geht die danach gesendete und empfangene Nachricht verloren. Es ist deshalb wichtig, im Schieberegister SR gespei-cherte Bitkombinationen – die keine Synchroni-sierworte sind – möglichst frühzeitig zu erkennen. Dies geschieht mit Hilfe des Decodierers DC3, der auf Bitkombinationen anspricht, die keine Synchronisierworte sind, und der das Decodiersignal D abgibt und damit das Flipflop FF vom Zustand der zweiten Phase PH2 in den Zustand der ersten Phase PH1 versetzt.

Wenn der Decodierer DC3 nicht vorgesehen wäre, dann würde es relativ lange dauern, bis eine gestörte Folge von Synchronisierbits S in Form von mehreren 0-Werten als solche erkannt würden. Mit einer Folge von 0-Werten am Eingang des Gatters U1 würde sich auch eine Folge von 0-Werten am Ausgang der Paritätsstufe PA ergeben und der Verfleicher VGL1 würde längere Zeit die Gleichheit der beiden Synchronisierbits S und S' signalisieren. Der Zähler Z5 würde dann bis zum Zählerstand L hochgezählt werden, und es wäre möglicherweise während der Synchronisierzeit nicht mehr möglich, das Referenzsignal R abzugeben. Der Decodierer DC3 sorgt somit dafür, dass Bitkombinationen, wie beispielsweise die Bitkombination 00000, schnellstens erkannt werden und dass nach Erkennung dieser Bitkombination im Rahmen der ersten Phase PH1 ein erneuter Synchronisierversuch gestartet wird.

Bei der Beschreibung des in Fig. 3 dargestellten Ausführungsbeispiels wurde bisher angenommen, dass mit den $n = 5$ Zellen des Schieberegi-sters SR insgesamt $2^n - 1 = 31$ Synchronisierworte erzeugt werden können. Die für $n = 5$ maximal lange Folge von Synchronisierbits hat somit eine Länge von 31 Bits. In manchen Fällen ist es wünschenswert, zwar einerseits mit grösseren Werten von n längere Folgen von Synchronisierbits zu erzeugen, aber anderseits nicht alle Synchronisierbits tatsächlich zu verwenden, sondern die Folge vorzeitig abzubrechen. Bei einem derartigen vorzeitigen Abbruch der Folge werden gelegentlich Bitkombinationen erzeugt und im Schieberegister SR gespeichert, die nicht als Synchronisierworte verwendet werden sollen. Auch derartige Bitkombinationen verzögern die Synchronisierung. Es ist deshalb zweckmässig, wenn der Decodierer DC3 schnellstens derartige Bitkombinationen signalisiert.

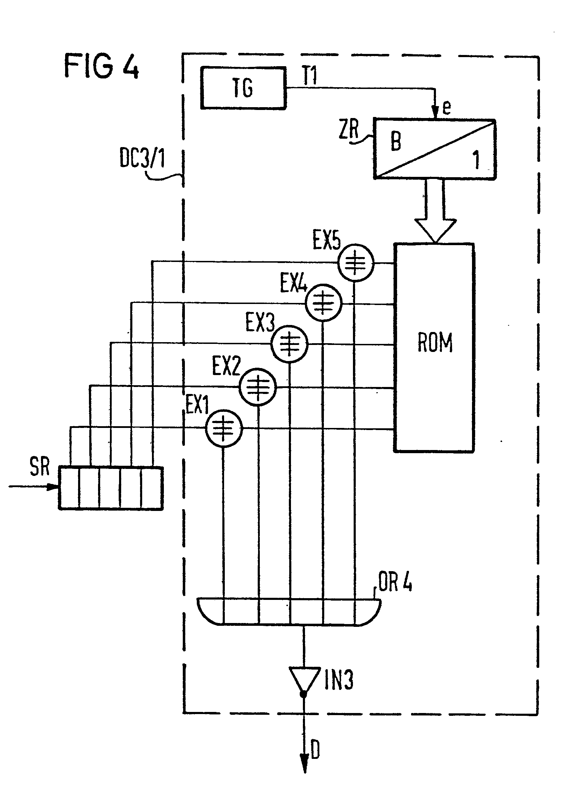

Fig. 4 zeigt den Decoder DC3/1 als Ausführungsbeispiel des in Fig. 3 dargestellten Decoders DC3. Dieser Decoder DC3/1 zeichnet sich dadurch aus, dass er mit relativ geringem technischen Aufwand alle jene Bitkombinationen signalisiert, die nicht Synchronisierworte sind. Der Taktgeber TG erzeugt die Impulsfolge T1, die zwischen zwei Impulsen der Impulsfolge T mindestens ebensoviele Impulse aufweist, wie Bitkombinationen erkannt werden sollen. Dem Zählregister ZR werden über den Zähleingang e die Impulse T1 zugeführt. Der jeweils erreichte Zählerstand wird vom Zählregister ZR in Form einer Binärzahl an den Festwertspeicher ROM abgegeben. Diese Zählerstände sind die Adressen für den Festwertspeicher ROM.

Der Festwertspeicher ROM speichert alle jene Bitkombinationen, die möglicherweise im Schieberegister SR gespeichert sein können und die als Synchronisierworte nicht in Frage kommen. Während der Dauer, während der eine einzige dieser Bitkombinationen im Schieberegister SR gespeichert ist, werden alle Adressen mit Hilfe des Zählregisters ZR mindestens je einmal erzeugt, und mindestens je einmal werden alle Bitkombinationen vom Festwertspeicher ROM abgegeben. Mit Hilfe der Exklusiv-ODER-Gatter EX1, EX2, EX3, EX4, EX5 werden die Bitkombinationen des Festwertspeichers ROM mit der jeweils im Schieberegister SR gespeicherten Bitkombination verglichen, und bei Ungleichheit entsprechender Bits wird ein 1-Signal an das Gatter OR4 abgegeben. Der Inverter IN3 invertiert das entsprechende vom Ausgang des Gatters OR4 abgegebene 1-Signal und gibt das Signal D = 0 ab, das das Fehlen der gesuchten Bitkombination signalisiert. Sollten aber alle Gatter EX1 bis EX5 jeweils 0-Signale abgeben, dann gleicht die im Schieberegister SR gespeicherte Bitkombination einer der vom Festwertspeicher ROM abgegebenen Bitkombinationen, und es wird das Decodiersignal D = 1 abgegeben, das eine störende Bitkombination signalisiert.

Es wäre grundsätzlich denkbar, dass die Synchronisierbits S im Zuge der empfangsseitigen Auswertung nicht nur im S Schieberegister SR, sondern auch noch in einem weiteren, in den Fig. 2 und 3 nicht dargestellten Schieberegister gespeichert werden. Der Decodierer DC3 könnte in diesem Fall auch an die Ausgänge der Zellen dieses weiteren Schieberegisters angeschlossen sein. In diesem Zusammenhang ist es vorteilhaft, den Decodierer DC3 an jenes Schieberegister anzuschliessen, in welches die Synchronisierbits S am frühesten eingespeichert werden. Auf diese Weise wird erreicht, dass Bitkombinationen, die kein Synchronisierwort sind, möglichst frühzeitig als solche erkannt werden, so dass in weiterer Folge mit dem Decodiersignal D auch die erste Phase PH1 möglichst frühzeitig eingeleitet wird.

## Patentansprüche

1. Verfahren zum Synchronisieren von Daten mit Hilfe von Synchronisierbits, wobei je n Synchronisierbits sich überlappende Synchronisierworte bilden, die einerseits das jeweils folgende Synchronisierbit und anderseits aufeinanderfolgende Zeitpunkte signalisieren; wonach empfangsseitig zeitlich aufeinanderfolgend Bitkombinationen, bestehend aus je n Bits, gespeichert werden, die wahrscheinlich den Synchronisierworten gleichen; wonach aus den Bitkombinationen das wahrscheinlich folgende Synchronisierbit ermittelt wird; wonach in einer ersten Phase die wahrscheinliche Gleichheit der Folge der empfangenen Synchronisierbits und der Folge der wahrscheinlichen Synchronisierbits ermittelt wird und wonach in einer zweiten Phase der Synchronisierzeitpunkt ermittelt wird, dadurch gekennzeichnet, dass nach dem Erreichen der zweiten Phase (PH2) die erste Phase (PH1) eingeleitet wird, falls eine Bitkombination (11111, 00000) kein Synchronisierwort ist (Fig. 2).

2. Schaltungsanordnung zur Durchführung des Verfahrens nach Anspruch 1, wonach die Bitkombinationen in einem Schieberegister gespeichert werden, dadurch gekennzeichnet, dass an die Ausgänge des Schieberegisters (SR) ein Decodierer (DC3) angeschlossen ist, der beim Auftreten einer Bitkombination (11111, 00000), die kein Synchronisierwort ist, ein Decodiersignal abgibt, das die Umschaltung von der zweiten Phase (PH2) in die erste Phase (PH1) bewirkt (Fig. 2, 3).

3. Schaltungsanordnung nach Anspruch 2, dadurch gekennzeichnet, dass der Decodierer (DC3) einen Festwertspeicher (ROM) enthält, der alle aus n Bits gebildeten und kein Synchronisierwort darstellenden Bitkombinationen speichert und nach Aufruf der entsprechenden Adressen über seine Ausgänge abgibt, dass mit Hilfe eines Adressengebers (TG, ZR) zwischen aufeinanderfolgenden Synchronisierbits zeitlich nacheinander alle Adressen der Bitkombinationen erzeugt und an den Festwertspeicher (ROM) abgegeben werden, dass n Vergleicher (EX1, EX2, EX3, EX4, EX5) einerseits an die Ausgänge des Schieberegisters (SR) und anderseits an die Ausgänge des Festwertspeichers (ROM) angeschlossen sind und dass die Ausgänge der Vergleicher mit einem Gatter (OR3) verbunden sind, über dessen Ausgang das Decodiersignal (D) abgegeben wird (Fig. 4).

## Claims

1. Process for the synchronisation of data with the aid of synchronising bits wherein n synchronising bits in each case form mutually overlapping synchronising words which on the one hand signal the particular following synchronising bit and on the other hand signal consecutive instants of time; in accordance with which bit combinations each composed of n bits, which are probably identical to the synchronising words, are stored consecutively in terms of time at the receiving end; in accordance with which the probable following synchronising bit is determined on the basis of the bit combinations; in accordance with which in a first phase the probable identity of the sequence of received synchronising bits and the sequence of probable synchronising bits is determined and in accordance with which in a second phase the synchronising instant of time is determined, characterised in that following the second phase (PH2) the first phase (PH1) is initiated if a bit combination (11111, 00000) does not represent a synchronising word (Fig. 2).

2. Circuit arrangement for the implementation of the process claimed in claim 1 in accordance with which the bit combinations are stored in a shift register, characterised in that the outputs of the shift register (SR) are connected to a decoder (DC3) which, on the occurrence of a bit combination (11111, 00000) which does not represent a synchronising word, emits a decoding signal which results in a switch-over from the second phase (PH2) to the first phase (PH1) (Fig. 2, 3).

3. Circuit arrangement as claimed in claim 2, characterised in that the decoder (DC3) contains a read-only memory (ROM) which stores all the bit combinations which are composed of n bits and which do not represent a synchronising word which it emits via its outputs following the call-up of the appropriate addresses, that with the aid of an address generator (TG, ZR), between consecutive synchronising bits all the addresses of the bit combinations are generated consecutively and are supplied to the read-only memory (ROM), that n comparators (EX1, EX2, EX3, EX4, EX5) are connected on the one hand to the outputs of the shift register (SR) and on the other hand to the outputs of the read-only memory (ROM) and that the outputs of the comparators are connected to a gate (OR3) via the output of which the decoder signal (D) is emitted (Fig. 4).

**Revendications**

1. Procédé pour synchroniser des données à l'aide de bits de synchronisation, des mots de synchronisation qui se chevauchent se formant pour n bits de synchronisation et signalant d'une part le bit de synchronisation suivant et d'autre part les instants qui se suivent, selon lequel, du côté réception, sont mémorisées successivement dans le temps des combinaisons de bits constituées chacune par n bits et qui sont apparemment identiques aux mots de synchronisation; selon lequel le bit de synchronisation suivant probable est déterminé à partir des combinaisons de bits;

selon lequel on détermine, dans une première phase, l'identité probable de la séquence des bits de synchronisation reçus et de la séquence des bits de synchronisation probables et selon lequel on détermine dans une seconde phase l'instant de synchronisation, caractérisé par le fait qu'après que soit atteinte la seconde phase (PH2) on fait démarrer la première phase (PH1) si une combinaison de bits (11111, 00000) n'est pas un mot de synchronisation (figure 2).

2. Montage pour la mise en œuvre du procédé selon la revendication 1, dans lequel les combinaisons de bits sont mémorisées dans un registre à décalage, caractérisé par le fait qu'aux sorties du registre à décalage (SR) est relié un décodeur (DC3) qui, à l'apparition d'une combinaison de bits (11111, 00000) qui n'est pas un mot de synchronisation, émet un signal de décodage qui provoque la commutation de la seconde phase (PH2) à la première (PH1) (figures 2, 3).

3. Montage selon la revendication 2, caractérisé par le fait que le décodeur (DC3) comporte une mémoire morte (ROM) qui mémorise toutes les combinaisons de bits formés par n bits et ne représentant pas un mot de synchronisation et qui, après appel des adresses correspondantes, les émet par ses sorties, qu'à l'aide d'un générateur d'adresses (TG, ZR) et entre des bits de synchronisation successifs, toutes les adresses des combinaisons de bits sont produites successivement dans le temps et sont fournies à la mémoire morte (ROM), que n comparateurs (EX1, EX2, EX3, EX4, EX5) sont reliés d'une part aux sorties du registre à décalage (SR) et d'autre part aux sorties de la mémoire morte (ROM) et que les sorties des comparateurs sont reliées à une porte (OR3) par la sortie de laquelle est émis le signal de décodage (D) (figure 4).

# FIG 1

# FIG 2

FIG 3

# FIG 4